# EUROPEAN PATENT APPLICATION

(11) **EP 2 546 012 A1**
(43) Date of publication of application: **16.01.2013**
(21) Application number: 10847427.1
(22) Date of filing: 10.03.2010
(51) Int. Cl.: B23C 5/20, B23B 27/00, B23B 27/14, B23B 51/00

(54) **CUTTING INSERT AND CUTTING TOOL**

(71) Applicant: Tungaloy Corporation, Iwaki-shi Fukushima 970-1144 (JP)
(72) Inventor: YOSHIOKA, Shiro, Iwaki-shi Fukushima 970-1144 (JP); KONTA, Shizue, Iwaki-shi Fukushima 970-1144 (JP)
(74) Representative: Vossius & Partner
(86) International application number: PCT/JP2010/054054
(87) International publication number: WO 2011/111197

(57) **Abstract**

A cutting insert having a cutting edge capable of suppressing an increase in cutting resistance applied to a cutting boundary portion with an increase in a depth of cut is provided. The cutting insert has a rake face, a flank, and a cutting edge formed at an intersection portion between the rake face and the flank and is removably attached to a mounting seat. The cutting edge has an angle decreasing portion in which a cutting edge angle gradually decreases in a direction in which the depth of cut of the cutting edge increases. For example, the rake face includes an upper rake face and a lower rake face. The flank is formed on a side surface between the top and bottom surfaces. The cutting edge is formed at an intersection portion between the upper rake face and the flank.

## Description

### Technical Field

The present invention relates to a cutting insert and a cutting tool provided with the same.

### Background Art

When a workpiece is machined, an optimal cutting tool in accordance with a type of machining, a material of the workpiece and the like is selected. One of important elements in selecting a cutting tool is a shape of a cutting edge of a cutting insert actually involved in cutting of the workpiece. For example, when a pocket shape of a die is to be machined, a cutting insert with a cutting edge having an approximately arc shape is used (See PTL 1), and a cutting insert with a cutting edge having a linear shape is used for the other machining of the die (See PTL 2).

### Citation List

### Patent Literature

PTL 1: Japanese Patent Laid-Open No. 2006-82168
PTL 2: Japanese Patent Laid-Open No. 2009-107051

### Summary of Invention

### Technical Problem

Meanwhile, if the shape of the cutting edge is an arc shape, a cutting edge angle gradually increases as a depth of cut increases. It should be noted that the cutting edge angle is an angle formed by a tangential line of the cutting edge and a reference surface perpendicular to the center axis of the tool body. With the increase of the cutting edge angle, the underformed chip thickness also increases. Therefore, cutting resistance applied to a cutting boundary portion which is a boundary between a portion involved in cutting and a portion not involved in cutting increases. This increase in cutting resistance reduces the life of the cutting edge until the cutting edge becomes worn and becomes unusable and increases the possibility of causing an accidental damage in the cutting boundary portion. Hence, in the case of the cutting insert having a cutting edge having an arc shape, the depth of cut is generally kept approximately 1.0 mm, which causes a problem in which machining efficiency is relatively low.

In contrast, in the case of the cutting insert having a linear cutting edge, the underformed chip thickness does not increase with the increase in the depth of cut, but the cutting resistance applied to the cutting boundary portion in a stage in which the depth of cut is small tends to be larger than the cutting edge having an arc shape. Therefore, in the case of the cutting insert having the linear cutting edge, there is a possibility that the cutting edge can be accidentally damaged at the moment when the workpiece is cut.

The present invention has been made in view of the above-described problems and has an object to provide a cutting insert having a cutting edge capable of suppressing an increase in cutting resistance applied to a cutting boundary portion as the depth of cut increases and a cutting tool to which the cutting insert is fixed.

### Solution to Problem

A cutting insert according to the present invention is removably attached to a mounting seat of a cutting tool body, and has a rake face, a flank, and a cutting edge formed at an intersection portion between the rake face and the flank and being, wherein the cutting edge has, at least at a part thereof, an angle decreasing portion in which a cutting edge angle gradually decreases in a direction in which a depth of cut of the cutting edge increases.

Preferably, the cutting edge has a plurality of the angle decreasing portions.

More preferably, the rake face includes an upper rake face formed on a top surface and a lower rake face formed on a bottom surface, the flank is formed on a side surface extending between the top surface and the bottom surface, and the cutting edge includes an upper cutting edge formed at an intersection portion between the upper rake face and the flank and a lower cutting edge formed at an intersection portion between the lower rake face and the flank. In this case, the upper cutting edge and the lower cutting edge are preferably plane-symmetric with respect to a plane passing through the middle between the top surface and the bottom surface and perpendicular to a center axis of the cutting insert. Moreover, the side surface is formed of a curved surface or a concave-convex surface in accordance with the shape of the cutting edge, and the side surface is fixed to the mounting seat.

Preferably, the angle decreasing portion of the cutting edge is formed of a concave curve.

Alternatively, the angle decreasing portion of the cutting edge is formed of a plurality of line segments.

Alternatively, the rake face is formed on a first side surface extending between the top surface and the bottom surface, the flank is formed on a second side surface extending between the top surface and the bottom surface and intersecting with the first side surface, and the cutting edge is formed at an intersection portion between the first side surface and the second side surface.

Preferably, the flank is provided with an engagement groove engaged with an engagement projection formed on the mounting seat of the cutting tool body.

A cutting tool according to the present invention has a cutting insert having a rake face, a flank, and a cutting edge formed at an intersection portion between the rake face and the flank and a cutting tool body having a mounting seat to which the cutting insert is removably attached, and the cutting edge has, at least at a part thereof, an angle decreasing portion in which a cutting edge angle formed by a tangential line at a point on the cutting edge and a reference surface perpendicular to the center axis of the cutting tool body gradually decreases in a direction in which the depth of cut of the cutting edge increases when the cutting insert is attached to the mounting seat.

Preferably, the engagement groove is formed in the flank, and the mounting seat of the cutting tool body has the engagement projection engaged with the engagement groove.

### Advantageous Effects of Invention

According to the present invention, it is possible to reduce cutting resistance applied to a cutting boundary portion when increasing the depth of cut, while improving machining efficiency.

### Brief Description of Drawings

Fig. 1 is a perspective view of a cutting tool according to an embodiment of the present invention;
Fig. 2 is a front view of the cutting tool in Fig. 1;
Fig. 3 is a cross-sectional view in a III-III line direction in Fig. 2;
Fig. 4 is a perspective view illustrating a cutting tool body of the cutting tool in Fig. 1;
Fig. 5 is a perspective view illustrating a cutting insert according to the embodiment of the present invention;
Fig. 6 is a plan view illustrating the cutting insert in Fig. 5;
Fig. 7 is a cross-sectional view in a VII-VII line direction in Fig. 6;
Fig. 8 is an enlarged view of a cutting edge of the cutting insert in a state attached to the cutting tool body;
Fig. 9A is a cross-sectional view illustrating another example of an engagement projection;
Fig. 9B is a cross-sectional view illustrating still another example of an engagement groove and the engagement projection;
Fig. 9C is a cross-sectional view illustrating still another example of an engagement groove and the engagement projection;
Fig. 10A is a perspective view of the cutting insert according to another embodiment of the present invention; and
Fig. 10B is a perspective view of the cutting insert according to still another embodiment of the present invention.

### Description of Embodiments

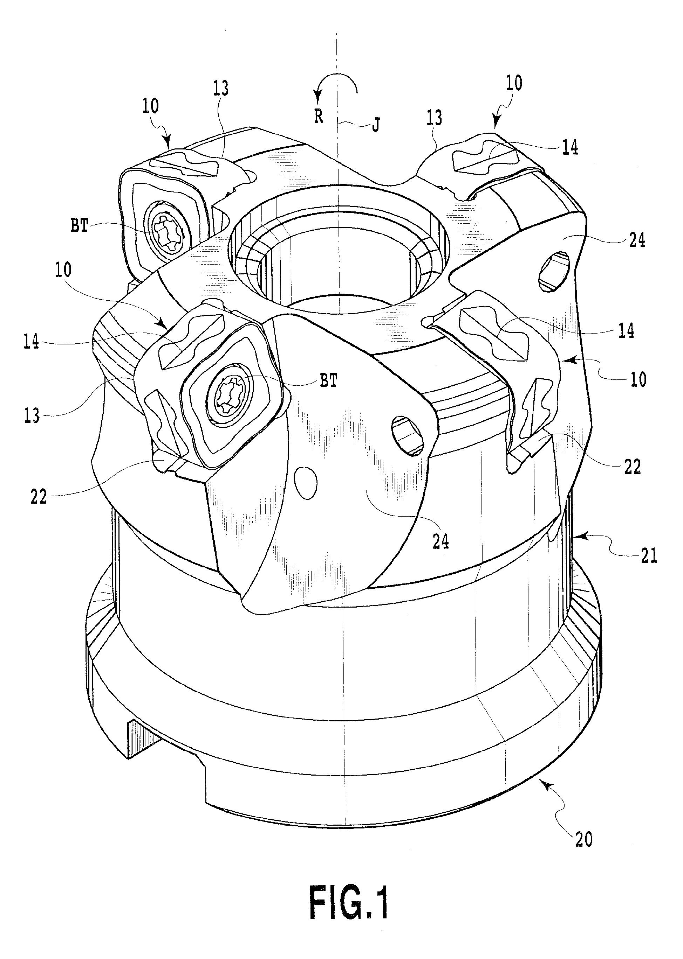

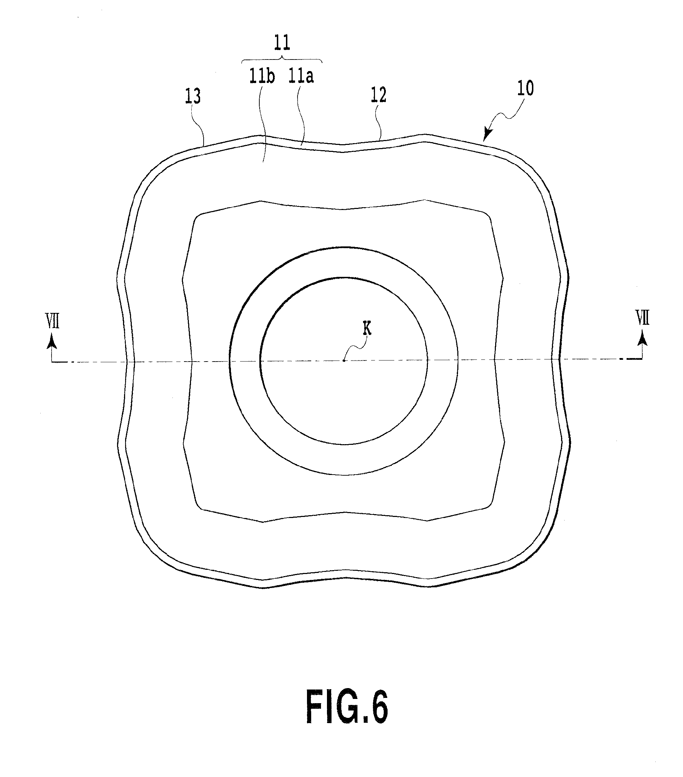

Hereinafter, an embodiment of the present invention will be described by referring to Figs. 1 to 8.

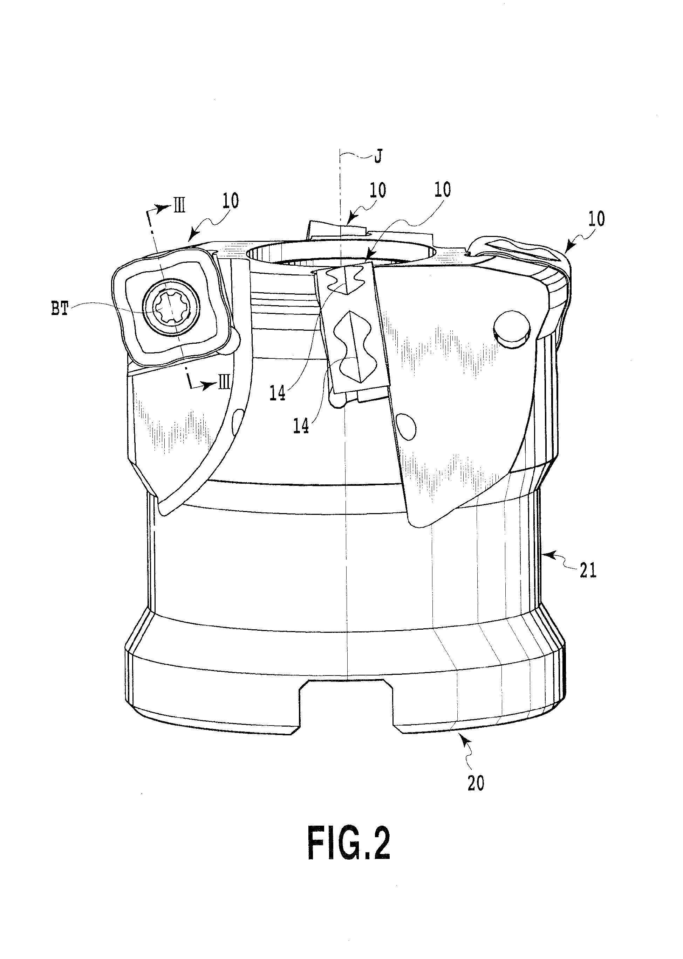

A cutting tool 20 illustrated in Figs. 1 and 2 is a high-feed cutter and includes a cutting tool body 21 and a plurality of cutting inserts 10.

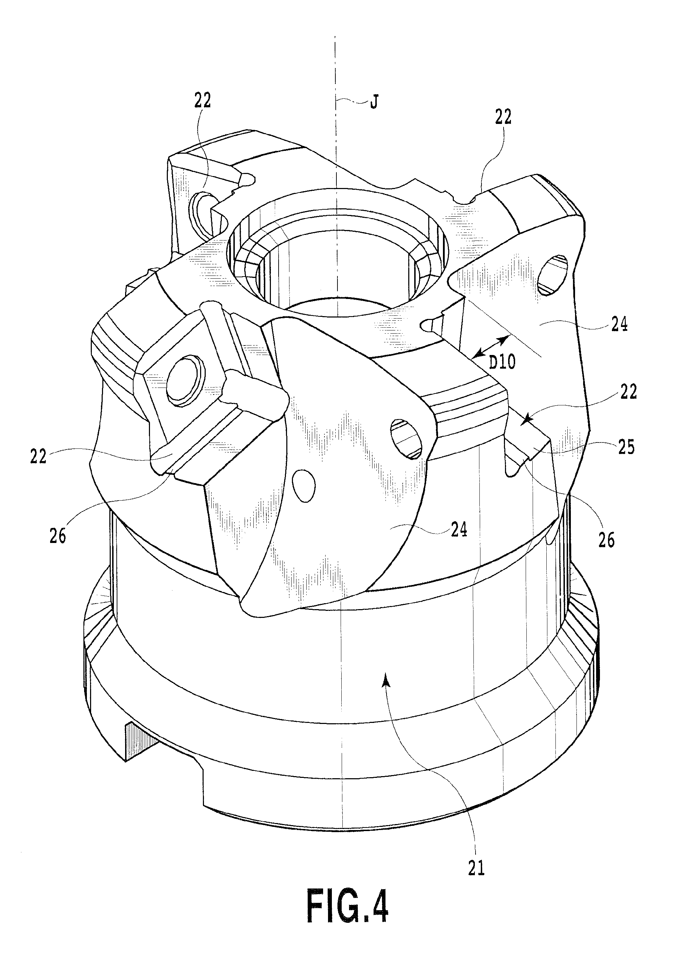

The cutting tool body 21 of the cutting tool 20 has, as illustrated in Fig. 4 and the like, an approximately cylindrical shape, and a connecting hole 23 for connecting to a machine tool is provided at the central part thereof, penetrating from a rear end portion to a leading end portion of the cutting tool body 21. In addition, the cutting tool body 21 has a plurality of mounting seats 22 formed at equal intervals in a circumferential direction centering on a center axis J. To each of the plurality of mounting seats 22, the cutting insert 10, which will be described later, is attached. The cutting insert 10 is fixed to the cutting tool body 21 by a bolt BT. In front of a rotating direction R of the mounting seat 22 formed at the leading end portion of the cutting tool body 21, a chip pocket 24 for smoothing generation, accommodation, and discharge of chips is formed. It should be noted that the structure of the mounting seat 22 will be described later.

The cutting tool 20 is attached to a main shaft of a machine tool such as a machining center and rotated around the center axis J thereof. And a workpiece located on a reference surface perpendicular to the center axis J of the cutting tool 20 is cut and machined by the cutting insert 10.

The mounting seat 22 is notched so that a part of the leading end portion of the cutting tool body 21 has approximately the same shape as that of the bottom surface of the cutting insert 10. A depth D10 of the notch is, as illustrated in Fig. 4, approximately equal to the thickness of the cutting insert 10. The mounting seat 22 is formed so that the cutting insert 10 is inclined by approximately 10° with respect to a reference surface perpendicular to the center axis J.

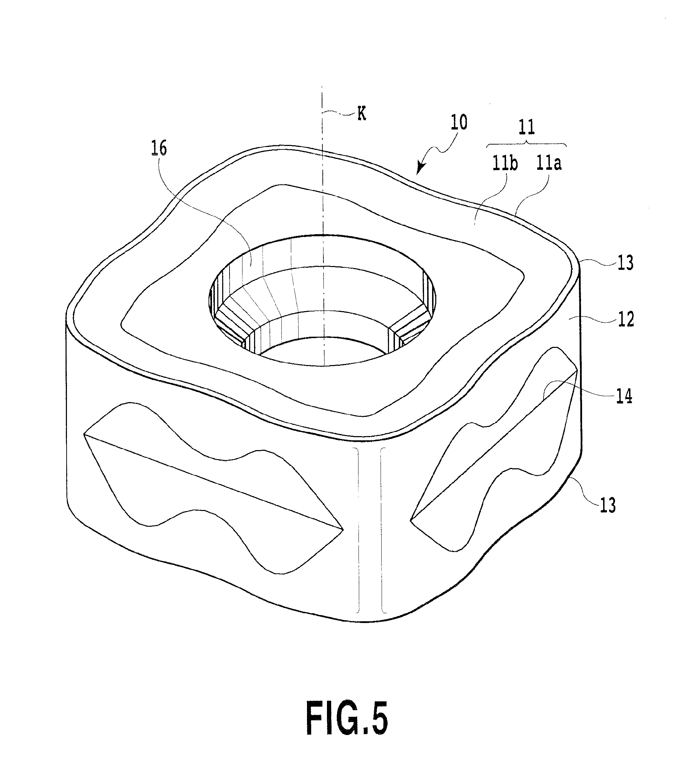

The cutting insert 10 is, as illustrated in Figs. 5 to 7, an approximately square plate-shaped member made of cemented carbide, and a through-hole 16 for inserting the bolt BT and fixing the cutting insert 10 to the cutting tool body 21 is formed at the central part. Moreover, on a top surface and a bottom surface of the cutting insert 10, a rake face 11 scratched by chips is formed, and on a side surface perpendicularly intersecting with the rake face 11, a flank 12 for avoiding contact with a workpiece is formed. Furthermore, at an intersection portion where the rake face 11 and the flank 12 intersect with each other, a cutting edge 13 for cutting the workpiece is formed.

The rake face 11 includes a plane portion 11a formed on an outer peripheral edge portion and an inclined face portion 11b inclined from the plane portion 11a toward an innermost portion of the rake face 11. Therefore, even if the cutting insert 10 is arranged at a negative angle with respect to the (axial) direction of the center axis J of the cutting tool 20, a relief angle is returned to the positive side by the amount of the inclination angle of the inclined face portion 11b, and thus the decrease in cutting performance can be suppressed. The negative angle in the axial direction refers to a state in which the rake face 11 is inclined in the rotating direction of the cutting tool 20, while the positive angle in the axial direction refers to a state in which the rake face 11 is inclined in a direction opposite to the rotating direction of the cutting tool 20.

Next, a configuration of a cutting edge 13 of the cutting insert 10 will be described.

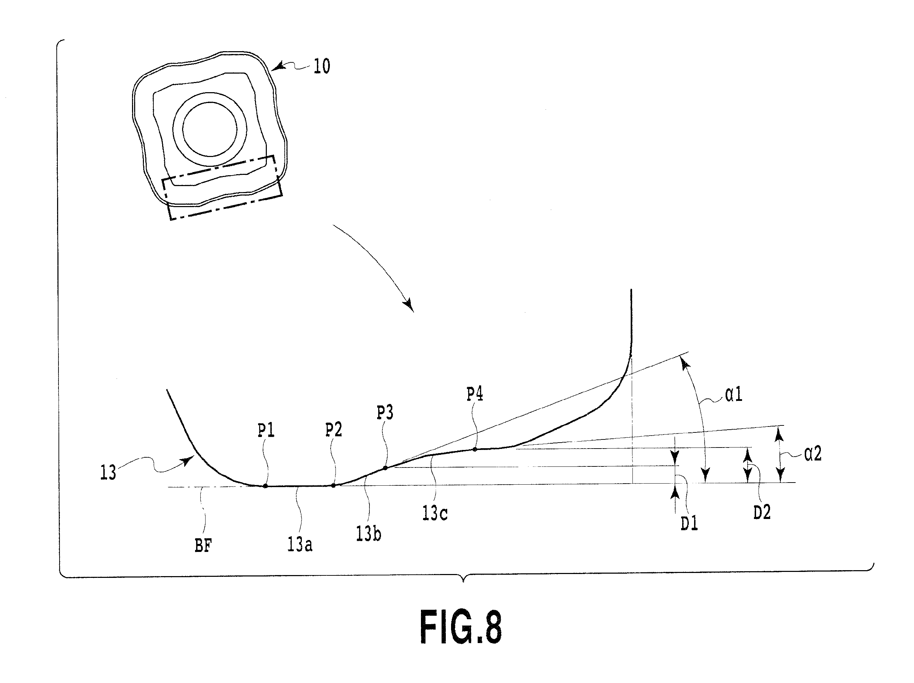

Fig. 8 illustrates a configuration of the cutting edge 13 of the cutting insert 10 attached to the mounting seat 22 of the cutting tool body 21.

In Fig. 8, the cutting edge 13 is a portion that first cuts into the workpiece during cutting and includes a wiper edge 13a formed linearly and defined from a P1 point to a P2 point, a continuing tip cutting edge 13b defined from the P2 point to a P3 point, and a continuing angle decreasing portion 13c defined from the P3 point to a P4 point and formed of a concave curve.

Here, the cutting edge angle α is an angle formed by a tangential line at a point on the cutting edge 13 and the reference surface BF. The cutting edge angle in this specification is a parameter pursuant to the industrial standards such as JIS. That is, as illustrated in Fig. 8, it is an angle formed by a tangential line at a point on the cutting edge 13 and the reference surface BF.

Since the tip cutting edge 13b is formed having a convex shape, the cutting edge angle α in the tip cutting edge 13b gradually increases in a direction in which a depth of cut D of the cutting edge 13 increases.

When the depth of cut D of the cutting edge 13 reaches D1, that is, when the P3 point of the angle decreasing portion 13c begins to be involved in cutting, the cutting edge angle α becomes α1 and takes the maximum value.

The depth of cut D of the cutting edge 13 gradually decreases in a direction in which the depth further increases from D1, that is, from the P3 point to the P4 point and takes the minimum value at the P4 point.

By forming the angle decreasing portion 13c having the above shape, when the angle decreasing portion 13c cuts into the workpiece, the cutting edge angle α continuously becomes smaller as the depth of cut D increases after that. Along with that, an underformed chip thickness also becomes smaller, and therefore, the cutting resistance applied to the cutting boundary portion decreases, and the wear on this portion is suppressed.

The angle decreasing portion 13c is formed at each of four spots at each of the respective cutting edges 13 on the top surface and the bottom surface of the cutting insert 10. Therefore, the upper cutting edge 13 and the lower cutting edge 13 are plane-symmetric with respect to a plane passing through the middle between the top surface and the bottom surface and perpendicular to the center axis K of the cutting insert.

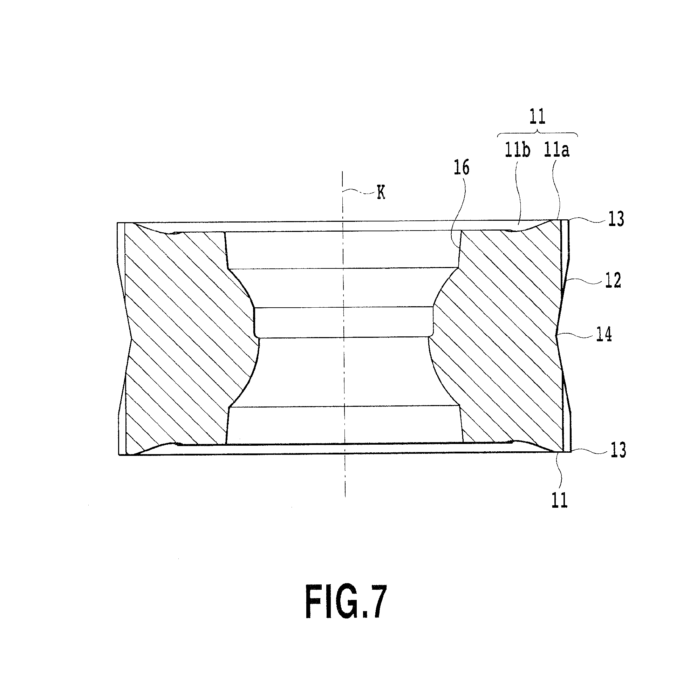

Moreover, the side surface (flank) 12 of the cutting insert 10 is formed of a curved surface corresponding to the shape of the cutting edge 13. In the flank 12 of the cutting insert 10, as illustrated in Figs. 5 and 7, an engagement groove 14 having a V-shaped cross-section is formed.

Since the side surface of the cutting insert 10 is curved, if the cutting insert 10 is placed on the flat ordinary mounting seat, a contact area with the seating face of the mounting seat becomes small, and seating stability tends to be lowered.

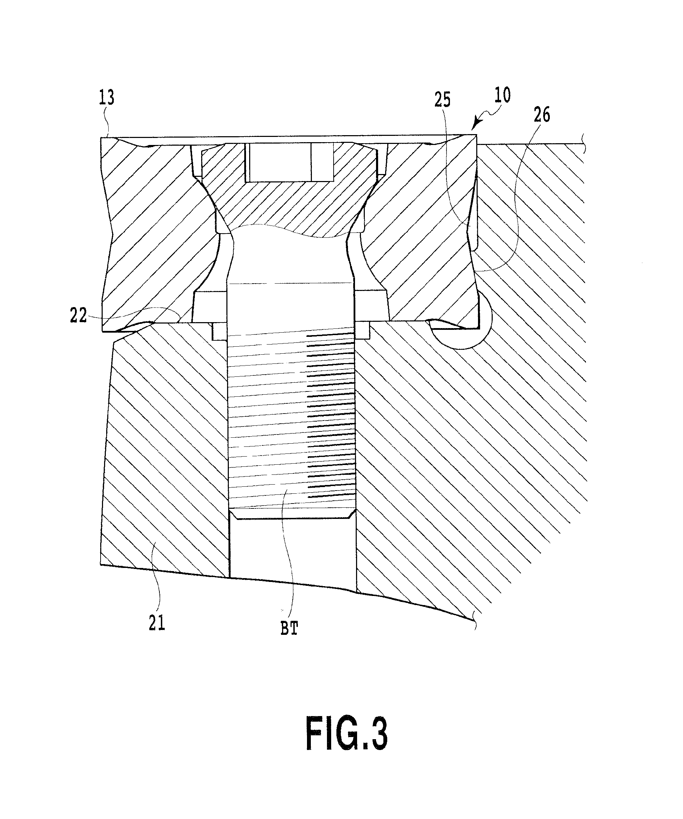

Therefore, on the mounting seat 22 of the tool body in this embodiment, as illustrated in Figs. 3 and 4, an engagement projection 26 is formed. Engagement of this engagement projection 26 with the engagement groove 14 formed in the cutting insert 10 improves the seating stability of the cutting insert 10.

That is, the engagement projection 26 is formed on the seating face 25 of the mounting seat 22. The engagement projection 26 is engaged with the V-shaped engagement groove 14 formed in the cutting insert 10 to make the cutting insert 10 stable.

The engagement projection 26 is formed, at the same angle as the inclination angle of the engagement groove 14, extending to the front of the rotating direction, and when the cutting insert 10 is placed on the mounting seat 22, the engagement projection 26 is brought into close contact with the inclined face on the rear side in the rotating direction of the engagement groove 14. Due to the fitting between the engagement projection 26 and the engagement groove 14, even if the cutting resistance is applied to the outside of the cutting insert 10 at the time of the cutting, the engagement projection 26 presses and fixes the cutting insert 10 to the mounting seat 22, and thus, seating stability of the cutting insert 10 is increased.

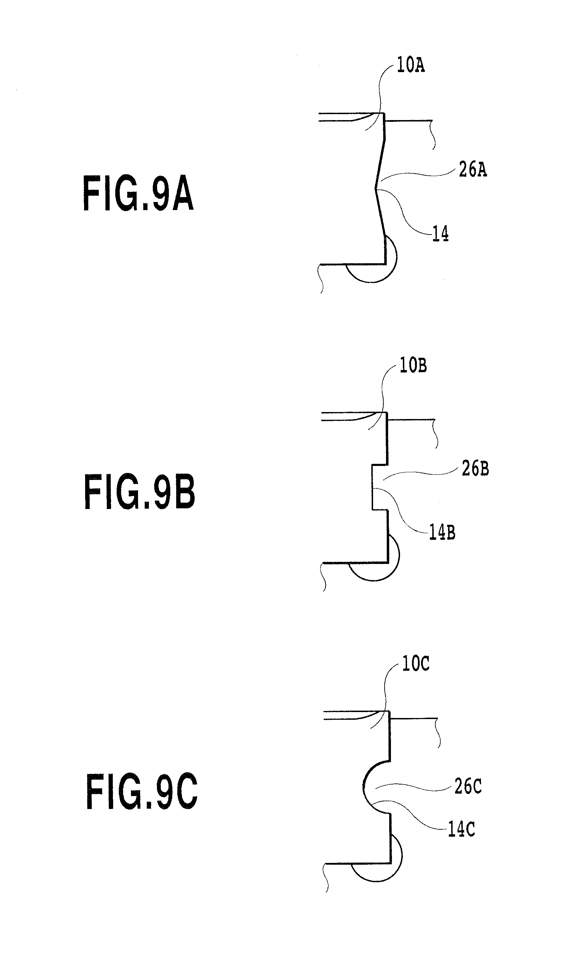

The cross-sectional shape of the engagement groove 14 and the cross-sectional shape of the engagement projection 26 are not limited to those described above. For example, as illustrated in Fig. 9A, an engagement projection 26A can be configured to have a V-shape corresponding to an engagement groove 14A so that the engagement projection 26A is fully fitted in the engagement groove 14A. By being configured as the above, the seating stability of a cutting insert 10A is further improved.

Moreover, as illustrated in Fig. 9B, the cross-sectional shape of the engagement groove can be rectangular so as to have an engagement groove 14B, and the engagement projection 26 to be fitted in the engagement groove 14B can also be a rectangular projection 26B.

Moreover, as illustrated in Fig. 9C, the cross-sectional shape of the engagement groove can be semi-circular so as to have an engagement groove 14C, and the section of the engagement projection 26 to be fitted in the engagement groove 14 can also be semi-circular so as to have a projection 26C.

Moreover, though not shown, by forming the shape of the seating face of the mounting seat 22 in accordance with the shape of the cutting edge 13, an area in contact with the cutting insert 10 is increased, and the seating stability can be further increased.

The cutting insert according to this embodiment is rotationally symmetric by 90° with respect to the center axis K of the rake face. Therefore, molding of the cutting insert is easily performed, and machining of the mounting seat is facilitated. Moreover, when the cutting insert is rotated and the cutting edge is switched, the cutting edge can be accurately indexed. Furthermore, the cutting insert of this embodiment is excellent in mounting stability to the mounting seat.

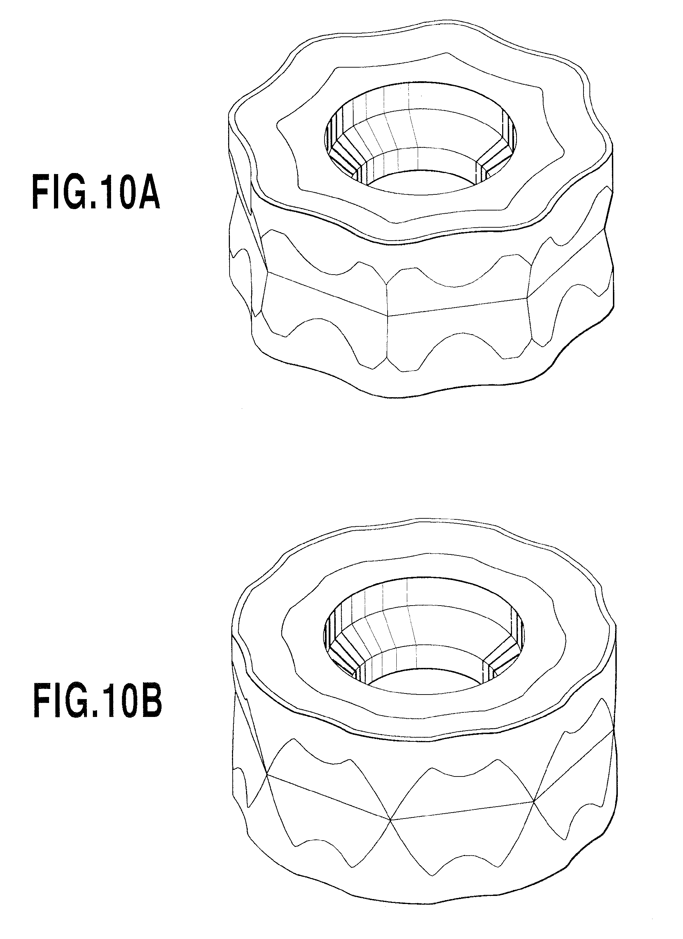

Moreover, the outer shape of the cutting insert is not limited to square, but as illustrated, for example, in Figs. 10A and 10B, the shape may be substantial octagon or substantial circle.

The present invention is not limited to the above-described embodiment. For example, the cutting insert of the present invention exerts the similar effect even if it is attached to a lathe turning tool or a drilling tool such as a bite or a drill, or is attached to a rolling cutter tool other than the above-described high-feed cutter.

A material other than cemented carbide can be employed as a material of the cutting insert, and for example, a cermet, ceramics, diamond sintered body, cubic boron nitride (cBN) sintered body or any one of these materials with coating on the surfaces can be employed.

Moreover, it is possible to configure such that a chip breaker is provided on the rake face of the cutting insert so that chips are finely fractured. In that case, as the shape of the chip breaker, a known shape may be employed.

The cutting-edge-angle decreasing cutting edge portion 13c of the cutting edge 13 can be formed of a plurality of line segments other than a curve. In this case, the flank (side surface) of the cutting insert is formed of a concave-convex surface instead of a curved surface.

In the above-described embodiment, the case where the tip end cutting edge is convexly curved has been described, but the tip end cutting edge may be linear. Furthermore, the case where the wiper edge is provided has been described, but the present invention can also be applied to a case where the wiper edge or tip end cutting edge does not exist.

The present invention can also be applied to a so-called positive-type insert in which the flank has a relief angle.

The case where the cutting insert 10 of the above-described embodiment is fixed by screwing the bolt BT into the seating face in the rotating direction R of the mounting seat 22 of the cutting tool body 21 has been described. The present invention is not limited to this cutting insert 10. For example, the present invention can also be applied to a cutting insert in which a rake face is formed on a first side surface extending between a top surface and a bottom surface, a flank is formed on a second side surface extending between the top surface and the bottom surface and intersecting with the first side surface, and a cutting edge is formed at an intersection portion between the first side surface and the second side surface. In this case, the cutting insert is fixed by screwing a bolt into the seating face in the radial direction of the mounting seat of the cutting tool body.

### Industrial Applicability

Since the cutting insert of the present invention can reduce a load to the cutting boundary portion, it is possible to improve cutting efficiency while prolonging the life of the cutting edge in high-feed machining. Moreover, according to the present invention, it is possible to prolong the life of the cutting edge, thereby being able to perform continuous high-feed machining for a long time.

Moreover, by using the cutting tool of the present invention along with the cutting insert of the present invention, the cutting insert of the present invention can be reliably fixed. A shift of the edge during machining decreases, and a state of a finished face can be made favorable.

## Claims

1. A cutting insert removably attached to a mounting seat of a cutting tool body, comprising:
a rake face;
a flank; and
a cutting edge formed at an intersection portion between the rake face and the flank and being, wherein
the cutting edge comprises, at least at a part thereof, an angle decreasing portion in which a cutting edge angle gradually decreases in a direction in which a depth of cut of the cutting edge increases.

2. The cutting insert according to claim 1, wherein
the cutting edge comprises a plurality of the angle decreasing portions.

3. The cutting insert according to claim 1, wherein
the rake face comprises an upper rake face formed on a top surface and a lower rake face formed on a bottom surface;
the flank is formed on a side surface extending between the top surface and the bottom surface; and
the cutting edge comprises an upper cutting edge formed at an intersection portion between the upper rake face and the flank and a lower cutting edge formed at an intersection portion between the lower rake face and the flank.

4. The cutting insert according to claim 1, wherein
the rake face is formed on a first side surface extending between the top surface and the bottom surface;
the flank is formed on a second side surface extending between the top surface and the bottom surface and intersecting with the first side surface; and
the cutting edge is formed at an intersection portion between the first side surface and the second side surface.

5. The cutting insert according to claim 3 or 4, wherein
the side surface is formed of a curved surface or a concave-convex surface corresponding to a shape of the cutting edge, and the side surface is fixed to the mounting seat.

6. The cutting insert according to claim 3, wherein
the upper cutting edge and the lower cutting edge are plane-symmetric with respect to a plane passing through the middle between the top surface and the bottom surface and perpendicular to a center axis of the cutting insert.

7. The cutting insert according to claim 1, wherein
the cutting insert has rotational symmetry about a center axis of the rake face.

8. The cutting insert according to claim 1, wherein
the angle decreasing portion of the cutting edge is formed of a concave curve.

9. The cutting insert according to claim 1, wherein
the angle decreasing portion of the cutting edge is formed of a plurality of line segments.

10. The cutting insert according to claim 1, wherein
the flank comprises an engagement groove engaged with an engagement projection formed on the mounting seat of the cutting tool body.

11. A cutting tool comprising:
a cutting insert having a rake face, a flank, and a cutting edge formed at an intersection portion between the rake face and the flank; and
a cutting tool body having a mounting seat to which the cutting insert is removably attached, wherein
the cutting edge comprises, at least at a part thereof, an angle decreasing portion in which a cutting edge angle formed by a tangential line at a point on the cutting edge and a reference surface perpendicular to the center axis of the cutting tool body gradually decreases in a direction in which the depth of cut of the cutting edge increases when the cutting insert is attached to the mounting seat.

12. The cutting tool according to claim 11, wherein
an engagement groove is formed in the flank; and
the mounting seat of the cutting tool body comprises an engagement projection engaged with the engagement groove.
